# EUROPEAN PATENT SPECIFICATION

(11) **EP 1 077 028 B1**
(45) Date of publication and mention of the grant of the patent: **09.07.2003**
(21) Application number: 99917212.5
(22) Date of filing: 28.04.1999
(51) Int. Cl.: A01N 37/52, A01N 55/00, A01N 43/653

(54) **BACTERICIDE COMPOSITION FOR AGRICULTURE AND HORTICULTURE**
BAKTERIZIDZUSAMMENSETZUNG FÜR ACKER- UND GARTENBAU
COMPOSITION BACTERICIDE POUR L'AGRICULTURE ET L'HORTICULTURE

(30) Priority: 30.04.1998 JP 13608798; 17.07.1998 JP 21981598; 17.08.1998 JP 24655298
(43) Date of publication of application: 21.02.2001
(60) Divisional application: 03005342.5
(73) Proprietor: NIPPON SODA CO., LTD., Chiyoda-ku, Tokyo 100-8165 (JP)
(72) Inventor: WAKAI, Akira, Tokyo 110-0005 (JP); HOSOKAWA, Hiroyasu, Haibara-gun, Sizuo (JP); HAMAMURA, Hiroshi-Odawara Res. Cen.,Nippon Soda Co, Kanagawa 250-0216 (JP)
(74) Representative: Wibbelmann, Jobst, Dr., Dipl.-Chem.
(86) International application number: JP9902281
(87) International publication number: WO99056549

(56) References cited:
- WO-A1-96/19442
- WO-A1-97/46092
- WO-A1-97/46096
- WO-A1-97/46097
- JP-A- 2 006 453
- JP-A- 9 235 262
- JP-A- 10 067 730

## Description

### Field of Invention

The present invention is related to a fungicidal composition for agricultural and horticultural use, and more particularly to a combined fungicidal composition.

### Background Art

Benzamidoxime compounds represented by a general formula (1) ; 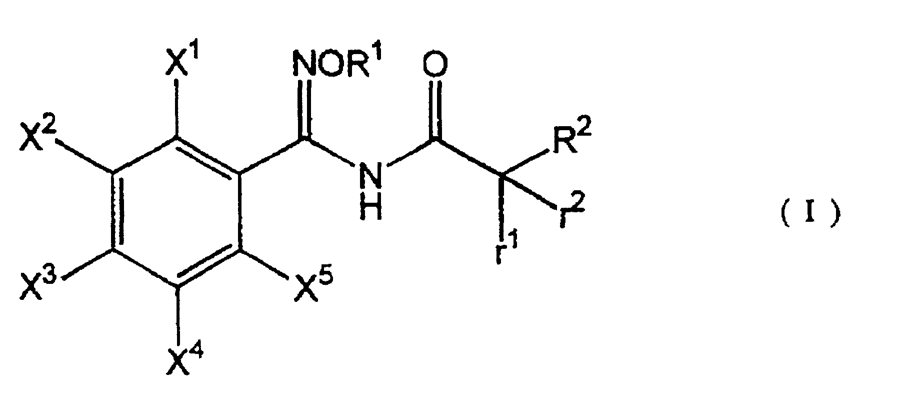 are the compounds disclosed as having fungicidal activity in JP No. 2696342 gazette, WO No. 96/19442 gazette, JP Laid-open Nos. Hei 235262 gazette and Hei 10-67730 gazette, WO No. 99/14187 gazette, WO No. 99/14188 gazette, etc.

Also, as fungicidal compounds, many compounds, such as benzimidazole compounds, dicarboxyimide compounds, guanidine compounds, acid amide compounds, anilinopyrimidine compounds, cinnamic acid derivatives, benzoisothiazole compounds, N-phenylcarbamate compounds, organophosphorous compounds and SBI type compounds, have been known. However, no combined fungicidal compositions comprising the compound represented by the general formula (1) and a fungicide selected from a group consisting of SBI type compounds showing to have the synergistic fungicidal activity have been reported.

### Disclosure of Invention

It is an object of the present invention to provide a combined fungicidal composition capable of reducing the use dose required for other known fungicides, improving the applicable spectrum range and giving the synergistic activity.

The present invention is directed to a fungicidal composition characterized by containing as the active ingredients a benzamidoxime compound represented by a general formula (I); 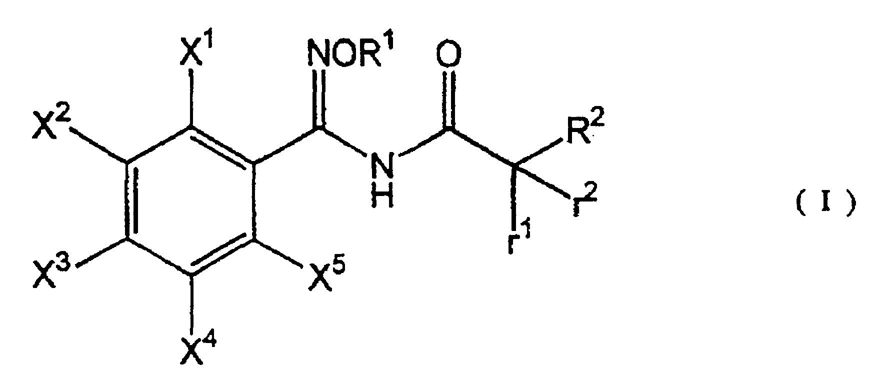 wherein R¹ represents halogeno, C₁₋₄ alkyl optionally-substituted with C₃₋₅ cycloalkyl, C₂₋₄ alkenyl optionally-substituted with halogeno or C₂₋₄ alkynyl optionally-substituted with halogeno,
R² represents phenyl optionally-substituted with halogeno, C₁₋₄ alkyl or C₁₋₄ alkoxy, or a heterocyclic ring optionally-substituted with halogeno, C₁₋₄ alkyl or C₁₋₄ alkoxy,
X1 represents halogeno, C₁₋₄ haloalkyl or C₁₋₄ haloalkoxy,
X2, X3, X4 and X5 represent each independently hydrogen, nitro, amino, halogeno, C₁₋₄ alkyl, C₁₋₄ haloalkyl, C₁₋₄ alkoxy, C₁₋₄ haloalkoxy, C₁₋₄ alkylthio, C₁₋₄ alkylsulfinyl, C₁₋₄ alkylsulfonyl or C₁₋₄ alkylcarbonylamino,
r¹ and r² represent each independently hydrogen, amino, halogeno, C₁₋₄ alkyl, C₁₋₄ haloalkyl, C₁₋₄ alkoxy or C₁₋₄ alkylthio, or r¹ and r² may form in together a carbonyl group, and one or more compounds selected from a group consisting of benzimidazole compounds, dicarboxyimide compounds, guanidine compounds, acid amide compounds, anilinopyrimidine compounds, cinnamic acid derivatives, benzoisothiazole compounds, N-phenylcarbamate compounds, organophosphorous compounds and SBI type compounds.

The benzamidoxime compound used for the present invention is a compound represented by the general formula (I), and one or more of the benzamidoxime compounds can be used as the active ingredients for the fungicidal composition according to the present invention.

As the examples for the group represented by R¹, C₁₋₄ alkyl, such as methyl, ethyl, propyl, isopropyl, butyl, isobutyl, s-butyl, t-butyl and cyclopropylmethyl, C₂₋₄ alkenyl, such as 2-propenyl, allyl, crotyl, 1-butenyl, 2-butenyl and butadienyl, C₂₋₄ alkynyl, such as ethynyl, 1-propynyl, 2-propynyl, 1-butynyl, 2-butynyl, 3-butynyl and propagyl, can be given.

The group represented by R¹ may be substituted with halogeno, such as fluorine, chlorine, bromine and iodine, or C₃₋₅ cycloalkyl, such as cyclopropyl, cyclobutyl and cyclopentyl.

R² represents phenyl or a heterocyclic ring, such as pyrazolyl and thienyl.

The phenyl or the heterocyclic ring described above may be substituted with halogeno, such as fluorine, chlorine, bromine and iodine, C₁₋₄ alkyl, such as methyl, ethyl, propyl, isopropyl, butyl, isobutyl, s-butyl, t-butyl and cyclopropylmethyl, or C₁₋₄ alkoxy, such as methoxy, ethoxy, propoxy, isopropoxy, butoxy, isobutoxy, s-butoxy, t-butoxy and cyclopropylmethoxy.

X¹ represents halogeno, such as fluorine, chlorine, bromine and iodine, C₁₋₄ haloalkyl, such as fluoromethyl, 1-fluoroethyl, 2-fluoroethyl, difluoromethyl, trifluoromethyl and pentafluoroethyl, or C₁₋₄ haloalkoxy, such as fluoromethoxy, 1-fluoroethoxy, 2-fluoroethoxy, difluoromethoxy, trifluoromethoxy and pentafluoroethoxy.

X², X³, X⁴ and X⁵ represent each independently hydrogen, nitro, amino, halogeno, such as fluorine, chlorine, bromine and iodine, _{C1-4} alkyl, such as methyl, ethyl, propyl, isopropyl, butyl, s-butyl, t-butyl and cyclopropylmethyl, C₁₋₄ haloalkyl, such as fluoromethyl, 1-fluoroethyl, 2-fluoroethyl, difluoromethyl, trifluoromethyl and pentafluoroethyl, C₁₋₄ alkoxy, such as methoxy, ethoxy, propoxy, isopropoxy, butoxy, isobutoxy, s-butoxy, t-butoxy and cyclopropylmethoxy, C₁₋₄ haloalkoxy, such as fluoromethoxy, 1-fluoroethoxy, 2-fluoroethoxy, difluoromethoxy, trifluoromethoxy and pentafluoroethoxy, C₁₋₄ alkylthio, such as methylthio, ethylthio, propylthio and butylthio, C₁₋₄ alkylsulfinyl, such as methylsulfinyl and ethylsulfinyl, C₁₋₄ alkylsulfonyl, such as methylsulfonyl and ethylsulfonyl, or C₁₋₄ alkylcarbonylamino, such as methylcarbonylamino and ethylcarbonylamino.

r¹ and r² represent each independently hydrogen, amino, halogeno, such as fluorine, chlorine, bromine and iodine, C₁₋₄ alkyl, such as methyl, ethyl, propyl, isopropyl, butyl, isobutyl, s-butyl, t-butyl and cyclopropylmethyl, C₁₋₄ haloalkyl, such as fluoromethyl, 1-fluoroethyl, 2-fluoroethyl, difluoromethyl, trifluoromethyl and pentafluoroethyl, C₁₋₄ alkoxy, such as methoxy, ethoxy, propoxy, isopropoxy, butoxy, isobutoxy, s-butoxy, t-butoxy and cyclopropylmethoxy, or C₁₋₄ alkylthio, such as methylthio, ethylthio, propylthio and butylthio, and r¹ and r² may form in together carbonyl.

The benzamidoxime compounds used in the present invention are the compounds represented by the general formula (I), and one or more of the benzamidoxime compounds can be used for the fungicidal composition according to the present invention. In Table 1, particularly preferable examples for the benzamidoxime compounds are presented.

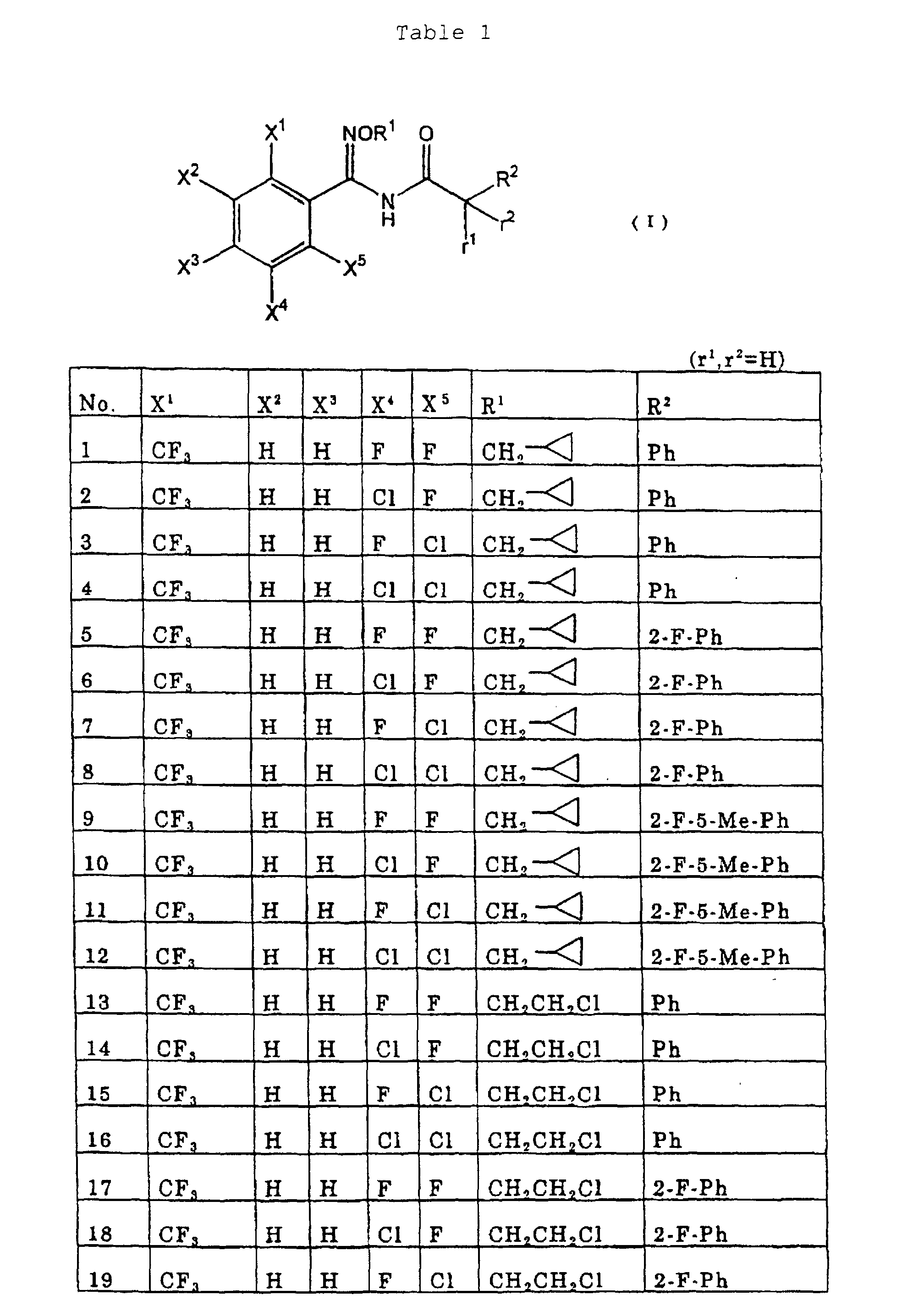

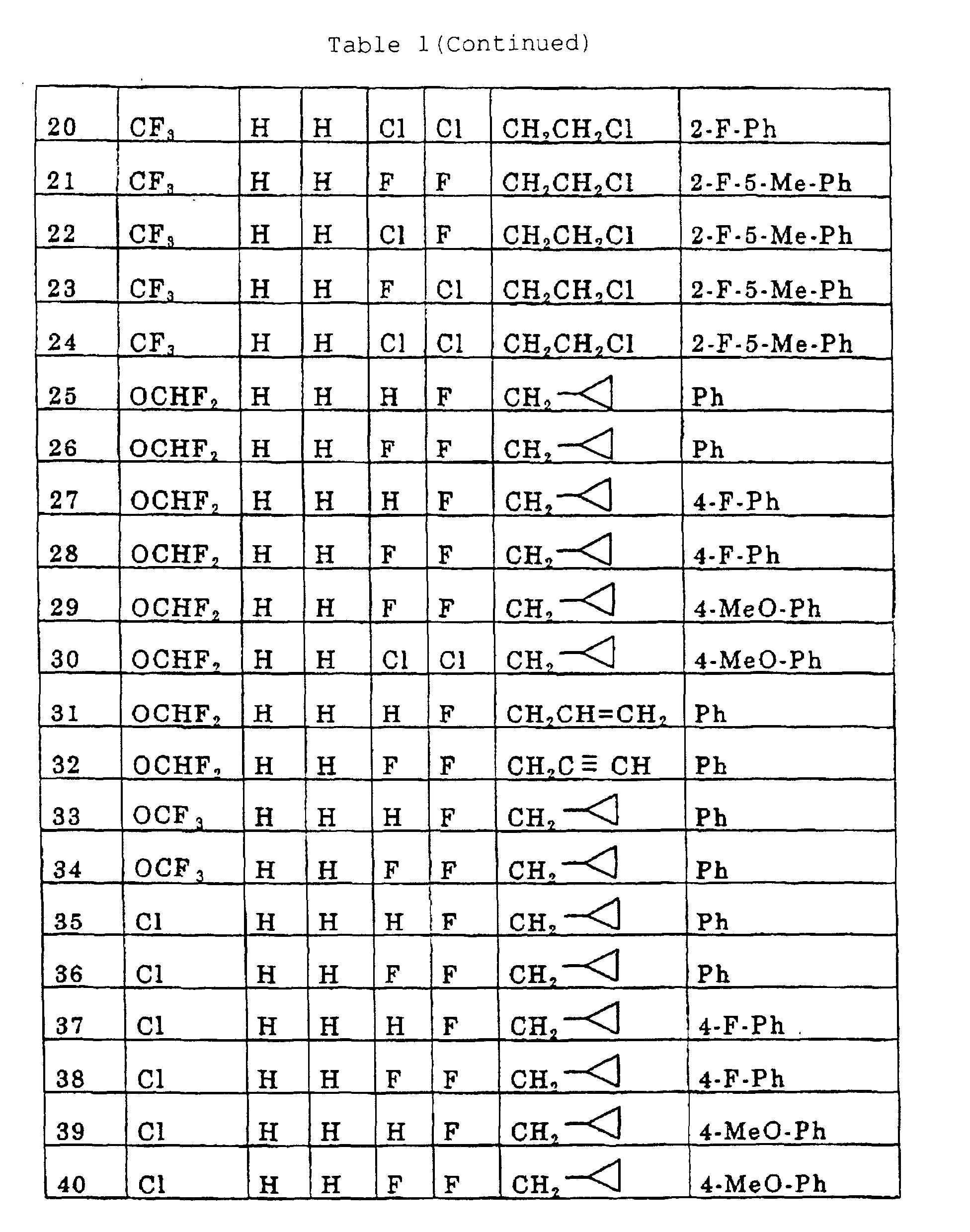

As SBI type compounds, bromoconazole, cyproconazole, diphenoconazole, fenbuconazole, flusilazole, flutriafol, hexaconazole, propiconazole, tebuconazole, tetraconazole, triadimefon, triadimenol, triflumizole, bitertanol, imibenconazole, diniconazole, fenpropimorph, fenpropidine, tridemorph, epoxyconazole, fluquinconazole, prochloraz and metoconazole are given, and one or more than two compounds of the compounds recited above can be used as the active ingredients for the fungicidal composition according to the present invention.

In the preparation of the fungicidal compounds according to the present invention, the combining rate of the benzamidoxime compound represented by the general formula (I) and a known fungicide selected from a group consisting of SBI type compounds can be freely fixed over a wide range, however, the combining rate is normally in a range of 1:0.01-1,000, and preferably in a rage of 1:1-100.

The fungicidal composition of the present invention is commonly admixed with solid carriers, liquid solvents, gaseous diluents, etc., added with surface active agents and other inert ingredients, if required, and is used in a formulation form, such as oily solution, emulsifiable concentrate, wettable powder, granules, powder, aerosol, suspension, foaming preparation, microcapsules, ULV and paste. In these formulations, the active ingredients as exemplified above are contained at the total content of from 0.1 to 99.9 wt%, and more preferably from 0.2 to 80 wt%.

At the formulation of the fungicidal composition, fine powder and granules including clays, such as kaolinite, diatomaceous earth, synthesized silicon hydroxide, fubasami clay, bentonite and acid clay, talc, and other inorganic minerals, such as sericite, silica powder, sulfur powder, activated carbon and calcium carbonate, are used as the solid carrier used for the formulation, whereas alcohols, such as methanol and ethanol, ketones, such as acetone, methyl ethyl ketone and cyclohexanone, aromatic hydrocarbons, such as toluene, xylene, ethyl benzene and methyl naphthalene, nonaromatic hydrocarbons, such as hexane, cyclohexane and kerosine, esters, such as ethyl acetate and butyl acetate, nitriles, such as acetonitrile and isobutylonitrile, ethers, such as dioxane and diisopropyl ether, acid amides, such as dimethylformamide and dimethylacetamide, halogenated hydrocarbons, such as dichloroethane and trichloroethylene, are used as the liquid solvent for the formulation, and carbon dioxide, butane gas, fluorocarbon, etc. are used as the gaseous diluents, namely spray gas, for the gaseous formulation.

As examples for the surface active agent, alkyl sulfates, alkyl sulfonates, alkyl aryl sulfonates, alkyl aryl ethers and their polyoxyethylenated compounds, polyethyleneglycol ethers, polyhydric alcohol esters, sugar alcohol derivatives and the like are given.

As other inert ingredients to be used for the formulations as described above, a sticking agent and a dispersing agent including casein, gelatin, polysaccharides, such as starch, gum Arabic, cellulose derivatives and alginic acid, ligninic acid derivatives, bentonite, synthesized aqueous polymers, such as polyvinyl alcohol, polyvinyl pyrrolidone and polyacrylic acid, and a stabilizing agent including PAP (acidic isopropyl phosphate), BHT (2,6-di-tert-butyl-4-methylphenol), BHA (2-/3-tert-butyl-4-methoxyphenol), vegetable oil, mineral oil, fatty acids, fatty acid esters, etc. are given.

The prepared formulations containing the fungicidal composition according to the present invention are applied either directly or after diluting them with water or the like to plants, to water surface or to soil. In addition, the formulated fungicidal composition can be used in combination with other fungicides, herbicides, fertilizers and soil conditioners. The applying dose of the fungicidal composition of the present invention varies depending upon the combining ratio of the active ingredients, namely the compound represented by the general formula (I) and any of benzimidazole compounds, dicarboxyimide compounds, guanidine compounds, acid amide compounds, anilinopyrimidine compounds, cinnamic acid derivatives, benzoisothiazole compounds, N-phenylcarbamate compounds and organophosphorous compounds, climatic condition, formulated form, application method, place to apply, objective plant disease and objective crop, however, the applying dose per hectare is normally in a range of from 1 to 1,000 g, and more preferably in a range of from 10 to 100 g. When using any of the emulsifiable concentrate, the suspension, the liquid, or the like of the fungicidal composition after diluting with water, the applying concentration is preferably in a range of from 1 to 1,000 ppm, and more preferably from 10 to 250 ppm. Whereas, the formulations, such as granules and powder, are normally applied directly without dilution.

The combined fungicidal composition according to the present invention is applicable for controlling agriculturally important plant diseases in wide range, and the representative examples for the plant diseases are presented in the following.
- Paddy Rice: Rice blast (Pyricularia oryzae)
Sheath blight (Rhizoctonia solani)
Bakanae disease (Gibberella fujikuroi)
Helminthosporium leaf spot (Cochilobolus miyabeabeanus)
- Barley: Loose smut (Ustilago nuda)

- Wheat: Scab (Gibberella zeae)
Leaf rust (Puccinia recondite)
Eye spot (Pseudocercosporella herpotrichoides)
Glume blotch (Leptosphaeria nodorum)
Powdery mildew (Erysiphe graminis f.sp.tritici)
Fusarium snow blight (Micronectriella nivalis)
- Potatoes: Late blight (Phytophthora infestans)
- Groundnuts: Leaf spot (Mycosphaerella arachidis)
- Sugarbeets: Cercospora leaf spot (Cercospora beticola)
- Cucumber: Powdery mildew (Sphaerotheca fuliginea)
Sclerotinia rot (Sclerotinia sclerotiorum)
Gray mold (Botrytis cinerea)
Downy mildew (Pseudoperonospora cubensis)
- Tomatoes: Leaf mold (Cladosporium fulvum)
Late blight (Phytophthora infestans)
- Egg plants: Black rot (Corynespora melongenae)
- Onion: Gray mold (Botrytis allii)
- Strawberries: Powdery mildew (Sphaerotheca humuli)
- Apples: Powdery mildew (Podosphaera leucotricha)
Scab (Venturia inaequalis)
Blossom blight (Monilinia mali)
- Japanese persimmon: Anthracnose (Gloeosporium kaki)
- Peaches: Brown rot (Monilinia fructicola)
- Vine trees: Powdery mildew (Uncinula necator)
Downy mildew (Plasmopara viticola)
- Pears: Rust (Gymnisporangium asiaticum)
Black spot (Alternaria kikuchiana)
- Tea plants: Leaf spot (Pestalotia theae)
Anthracnose (Colletotrichum theae-sinensis)
- Citrus: Scab (Elisinoe fawcettii)
Blue mold (Pennisillium italicum)
- Lawn: Sclerotinis rot (Sclerotinia borealis)

### Best Modes for Carrying out the Invention

Now, the examples for the fungicidal composition according to the present invention are described below, however, the active ingredients, the additives, the adding rates and the formulation types should not be limited to the scope of the description, those which can be replaced with other substitutes over a wide range. The part indicated in the examples represents the part by weight.

| (Example 1) Emulsifiable Concentrate | |
|---|---|
| Compound No. 1 presented in Table 1 | 10 parts |
| flusilazole | 160 parts |
| solvesso 200 | 220 parts |
| polyoxyethylene tristyrylphenyl ether | 100 parts |
| polyoxyethylene tristyryl phenyl ether sulfate | 10 parts |
| NMP (N-methyl-2-pyrrolidone) | 500 parts |
| (Example 2) Emulsifiable Concentrate Compound No. 1 presented in Table 1 | 10 parts |
| tebuconazole | 200 parts |
| solvesso 200 | 220 parts |
| polyoxyethylene tristyrylphenyl ether | 100 parts |
| polyoxyethylene tristyryl phenyl ether sulfate | 10 parts |
| NMP (N-methyl-2-pyrrolidone) | 460 parts |

### Advantageous Effect of the Invention

### (Test Example 1) Efficacy Test on Wheat Powdery Mildew (Field Test)

The fungicidal composition prepared according to the example 1 and example 2 was diluted at a prefixed concentration and applied once to wheat at the young shooting stage by using a sprayer with carbon dioxide pressure. On 26 days after the spray, the rate of infected leaves was examined.

The results were shown in Table 2.

**Table 2**

| Composition | Dose (gai/ha) | Incidence (%) |
|---|---|---|
| Compound No.1 + flucilazole | 12.5 + 200 | 2.5 |
| Compound No.1 + tebuconazole | 12.5 + 250 | 1.3 |
| Compound No.1 | 12.5 | 5.0 |
| flucilazole | 200 | 10.0 |
| tebuconazole | 250 | 6.3 |
| Untreated | 0 | 23.8 |

### Industrial Use of the Invention

The combined fungicidal composition according to the present invention allows to provide higher fungicidal performance than the one given by the single application of the respective component active ingredient owing to the synergistic action.

## Claims

1. A fungicidal composition for agricultural and horticultural use **characterized by** containing as the active ingredients a benzamidoxime compound represented by a general formula (I); 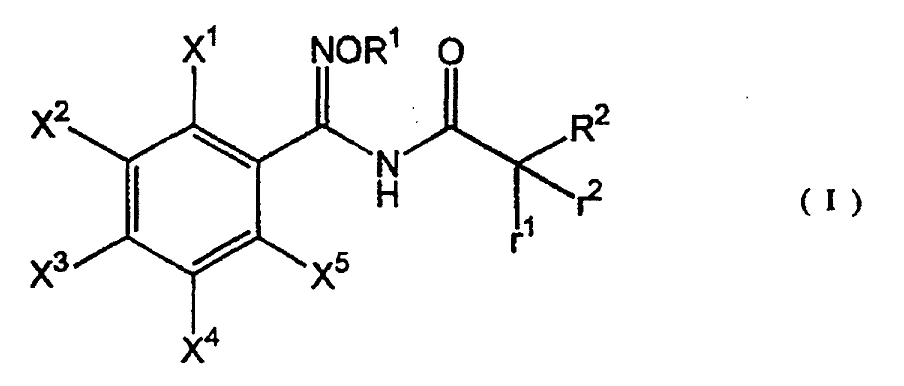 wherein R¹ represents halogeno, C₁₋₄ alkyl optionally-substituted with C₃₋₅ cycloalkyl, C₂₋₄ alkenyl optionally-substituted with halogeno or C₂₋₄ alkynyl optionally-substituted with halogeno,
R² represents phenyl optionally-substituted with halogeno, C₁₋₄ alkyl or C₁₋₄ alkoxy, or a heterocyclic ring optionally-substituted with halogeno, C₁₋₄ alkyl or C₁₋₄ alkoxy,
X¹ represents halogeno, C₁₋₄ haloalkyl or C₁₋₄ haloalkoxy,
X², X³, X⁴ and X⁵ represent each independently hydrogen, nitro, amino, halogeno, C₁₋₄ alkyl, C₁₋₄ haloalkyl, C₁₋₄ alkoxy, C₁₋₄ haloalkoxy, C₁₋₄ alkylthio, C₁₋₄ alkylsulfinyl, C₁₋₄ alkylsulfonyl or C₁₋₄ alkylcarbonylamino,
r¹ and r² represent each independently hydrogen, amino, halogeno, C₁₋₄ alkyl, C₁₋₄ haloalkyl, C₁₋₄ alkoxy or C₁₋₄ alkylthio, or r¹ and r² may form in together a carbonyl group, and one or more SBI type compounds.

2. The fungicidal composition for agricultural and horticultural use according to the claim 1, **characterized in that** the benzamidoxime compound is represented by the general formula (I), wherein R¹ represents C₁₋₄ alkyl optionally-substituted by C₃₋₅ cycloalkyl, R² represents phenyl optionally-substituted with halogeno, C₁₋₄ alkyl or C₁₋₄ alkoxy, X¹ represents halogeno, C₁₋₄ haloalkyl or C₁₋₄ haloalkoxy, X², X³, X⁴ and X⁵ represent each independently hydrogen or halogeno, and r¹ and r² represent hydrogen.

3. The fungicidal composition for agricultural and horticultural use according to the claims 1 or 2, wherein the SBI type compound is one or more selected from a group consisting of bromoconazole, cyproconazole, diphenoconazole, fenbuconazole, flusilazole, flutriafol, hexaconazole, propiconazole, tebuconazole, tetraconazole, triadimefon, triadimenol, triflumizole, bitertanol, imibenconazole, diniconazole, fenpropimorph, fenpropidine, tridemorph, epoxyconazole, fluquinconazole, prochloraz and metoconazole.

## Patentansprüche

1. Fungizide Zusammensetzung zur Verwendung im Acker- und Gartenbau, **dadurch gekennzeichnet, dass** sie als aktive Bestandteile eine Benzamidoxim-Verbindung, die durch die allgemeine Formel (I) 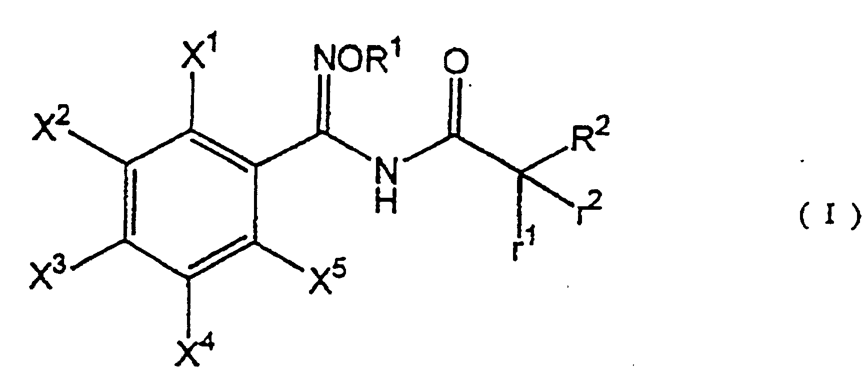 därgestellt wird, in der
R¹ Halogen, C₁₋₄-Alkyl, das gegebenenfalls mit C₃₋₅-Cycloalkyl substituiert ist, C₂₋₄-Alkenyl, das gegebenenfalls mit Halogen substituiert ist, oder C₂₋₄-Alkinyl, das gegebenenfalls mit Halogen substituiert ist, darstellt,
R² Phenyl, das gegebenenfalls mit Halogen, C₁₋₄-Alkyl oder C₁₋₄-Alkoxy substituiert ist, oder einen heterocyclischen Ring, der gegebenenfalls mit Halogen, C₁₋₄-Alkyl oder C₁₋₄-Alkoxy substituiert ist, darstellt,
X¹ Halogen, C₁₋₄-Halogenalkyl oder C₁₋₄-Halogenalkoxy darstellt,
X², X³, X⁴ und X⁵ jeweils unabhängig Wasserstoff, Nitro, Amino, Halogen, C₁₋₄-Alkyl, C₁₋₄-Halogenalkyl, C₁₋₄-Alkoxy, C₁₋₄-Halogenalkoxy, C₁₋₄-Alkylthio, C₁₋₄-Alkylsulfinyl, C₁₋₄-Alkylsulfonyl oder C₁₋₄-Alkylcarbonylamino darstellen,
r¹ und r² jeweils unabhängig Wasserstoff, Amino, Halogen, C₁₋₄-Alkyl, C₁₋₄-Halogenalkyl, C₁₋₄-Alkoxy oder C₁₋₄-Alkylthio darstellen oder R¹ und R² zusammen eine Carbonylgruppe bilden können,
und eine oder mehrere Verbindungen vom SBI-Typ enthält.

2. Fungizide Zusammensetzung zur Verwendung im Acker- und Gartenbau nach Anspruch 1, **dadurch gekennzeichnet, dass** die Benzamidoxim-Verbindung durch die allgemeine Formel (I) dargestellt wird, in der R¹ für C₁₋₄-Alkyl steht, das gegebenenfalls mit C₃₋₅-Cycloalkyl substituiert ist, R² für Phenyl steht, das gegebenenfalls mit Halogen, C₁₋₄-Alkyl oder C₁₋₄-Alkoxy substituiert ist, X¹ Halogen, C₁₋₄-Halogenalkyl oder C₁₋₄-Halogenalkoxy darstellt, X², X³, X⁴ und X⁵ jeweils unabhängig Wasserstoff oder Halogen darstellen, und r¹ und r² Wasserstoff darstellen.

3. Fungizide Zusammensetzung zur Verwendung im Acker- und Gartenbau nach den Ansprüchen 1 oder 2, in der die Verbindung vom SBI-Typ aus einem oder mehreren Gliedern einer Gruppe ausgewählt ist, die aus Bromoconazol, Cyproconazol, Diphenoconazol, Fenbuconazol, Flusilazol, Flutriafol, Hexaconazol, Propiconazol, Tebuconazol, Tetraconazol, Triadimefon, Triadimenol, Triflumizol, Bitertanol, Imibenconazol, Diniconazol, Fenpropimorph, Fenpropidin, Tridemorph, Epoxyconazol, Fluquinconazol, Prochloraz und Metoconazol besteht.

## Revendications

1. Composition fongicide pour une utilisation en agriculture et en horticulture, **caractérisée en ce qu'**elle contient comme ingrédients actifs un composé benzamidoxine représenté par la formule générale (I): 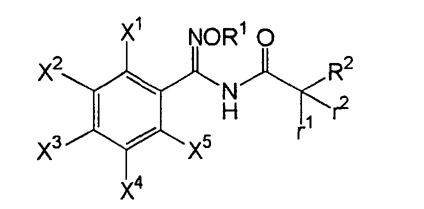 dans laquelle
R¹ représente un groupe halogéno, alkyle en C₁₋₄ éventuellement substitué par un groupe cycloalkyle en C₃₋₅, alcényle en C₂₋₄ éventuellement substitué par un groupe halogéno ou alcynyle en C₂₋₄ éventuellement substitué par un groupe halogéno,
R² représente un groupe phényle éventuellement substitué par un groupe halogéno, alkyle en C₁₋₄ ou alcoxy en C₁₋₄, ou un cycle hétérocyclique éventuellement substitué par un groupe halogéno, alkyle en C₁₋₄ ou alcoxy en C₁₋₄,
X¹ représente un groupe halogéno, haloalkyle en C₁₋₄ ou haloalcoxy en C₁₋₄,
X², X³, X⁴ et X⁵ représentent chacun indépendamment l'hydrogène, un groupe nitro, amino, halogéno, alkyle en C₁₋₄, haloalkyle en C₁₋₄, alcoxy en C₁₋₄, haloalcoxy en C₁₋₄, alkylthio en C₁₋₄, alkylsulfinyle en C₁₋₄, alkylsulfonyle en C₁₋₄ ou alkylcarbonylamino en C₁₋₄,
r¹ et r² représentent chacun indépendamment l'hydrogène, un groupe amino, halogéno, alkyle en C₁₋₄, haloalkyle en C₁₋₄, alcoxy en C₁₋₄ ou alkylthio en C₁₋₄, ou r¹ et r² peuvent former ensemble un groupe carbonyle, et un ou plusieurs composés de type SBI.

2. Composition fongicide pour une utilisation en agriculture et en horticulture selon la revendication 1, **caractérisée en ce que** le composé benzamidoxine est représenté par la formule générale (I), dans laquelle R¹ représente un groupe alkyle en C₁₋₄ éventuellement substitué par un groupe cycloalkyle en C₃₋₅, R² représente un groupe phényle éventuellement substitué par un groupe halogéno, alkyle en C₁₋₄ ou alcoxy en C₁₋₄,
X¹ représente un groupe halogéno, haloalkyle en C₁₋₄ ou haloalcoxy en C₁₋₄, X², X³, X⁴ et X⁵ représentent chacun indépendamment l'hydrogène ou un groupe halogéno, et r¹ et r² représentent l'hydrogène.

3. Composition fongicide pour une utilisation en agriculture et en horticulture selon les revendications 1 ou 2, **caractérisée en ce que** le composé de type SBI en est un ou plusieurs choisi dans le groupe constitué par le bromoconazole, le cyproconazole, le diphénoconazole, le fenbuconazole, le flusilazole, le flutriafol, l'hexaconazole, le propiconazole, le tébuconazole, le tétraconazole, le triadiméfon, le triadiménol, le triflumizole, le bitertanol, l'imibenconazole, le diniconazole, le fenpropimorphe, la fenpropidine, le tridémorphe, l'époxyconazole, le fluquinconazole, le prochloraz et le métoconazole.
